# EUROPÄISCHE PATENTANMELDUNG

(11) **EP 0 523 366 A2**
(43) Veröffentlichungstag der Anmeldung: **20.01.1993**
(21) Anmeldenummer: 92109587.3
(22) Anmeldetag: 05.06.1992
(51) Int. Cl.: H04M 1/72

(54) **Verfahren zur Reduzierung des Leistungsverbrauches des Mobilteiles einer schnurlosen Fernsprechstation**

(30) Priorität: 27.06.1991 DE 4121302
(71) Anmelder: SIEMENS AKTIENGESELLSCHAFT, D-80333 München (DE)
(72) Erfinder: Pillekamp, Klaus-Dieter, Dipl.-Ing., W-4006 Erkrath (DE)

(57) **Zusammenfassung**

Die Erfindung betrifft ein Verfahren zur Reduzierung des Leistungsverbrauches des Mobilteiles einer schnurlosen Fernsprechstation. In Abhängigkeit eines vorgegebenen Pegelsignals wird während eines Rahmenabschnittes einer Rahmensynchronisation festgestellt, ob eine Information vorliegt und zu übertragen ist oder ob ein ganzer Rahmenabschnitt keine Information enthält. Wird bei einem zunächst gespeicherten Rahmenabschnitt keine Information festgestellt, dann wird aus dieser Feststellung heraus ein Steuersignal erzeugt, das nach Aussenden des Steuersignales den Sender des Mobilteiles für den Rest des Rahmenabschnittes abschaltet und im Festteil während der Abschaltzeit ein Rauschen generiert.
Damit wird ein gewisser Teil der Sendeenergie eingespart und damit der Leistungsverbrauch des Mobilteiles gesenkt. Anwendung findet das Verfahren bei schnurlosen Telefonstationen.

## Beschreibung

Die Erfindung betrifft ein Verfahren zur Reduzierung des Leistungsverbrauches des Mobilteiles einer schnurlosen Fernsprechstation, wobei die Übertragung der Information vom Mobilteil zum Festteil in einer Rahmensynchronisation übertragen wird, wobei die in einem Rahmenabschnitt enthaltene Information zunächst gespeichert, digitalisiert und dann in digitaler Form rahmenabschnittsweise zum Festteil übertragen wird und wobei vor jedem Rahmenabschnitt Steuerinformationen zugesetzt werden.

In schnurlosen Mobilteilen solcher Fernsprechstationen besteht die Stromversorgung aus Primärzellen oder Akkus. Um die Betriebsdauer eines Mobilteiles ohne Auswechseln der Primärzellen oder Aufladen der Akkus zu verlängern, sollte der Leistungsverbrauch des Mobilteiles möglichst gering gehalten werden. Der Leistungsverbrauch ist einmal abhängig von der verwendeten Schaltung und von den benutzten Bauelementen. Wesentlich ist aber auch der Leistungsverbrauch des Senders in Abhängigkeit der Sendezeit. Bei Telefongesprächen erfolgt im Mittel der Informationsaustausch nur während ca. 50% der Telefonverbindung auf Grund der wechselseitigen Sprechrichtung. Es ist jedoch allgemein bekannt, daß auch eine flüssige Sprache noch zu ca. 30% aus Sprachpausen besteht.

Aufgabe der Erfindung ist es, ein Verfahren zu finden, mit dessen Hilfe eine Auswertung dieser Sprachpausen erfolgen kann, damit sie zur Einsparung von Sendezeiten führen.

Dies wird dadurch erreicht, daß Sprachpausen in der Information durch Vergleich mit einem Signalpegel erkannt werden, daß eine Sprachpause zu einer Pauseninformation führt, wenn diese länger ist als ein Rahmenabschnitt, daß diese Pauseninformation den Steuerinformationen für die Übertragung des folgenden Rahmenabschnittes zugesetzt wird und daß diese Pauseninformation nach der Übertragung der Steuerinformationen den Sender des Mobilteiles für den Rest des Rahmenabschnittes außer Betrieb setzt und gleichzeitig im Festteil für diese Zeit ein Rauschen generiert.

Hieraus ergibt sich der Vorteil, daß während einer größeren Sprachpause in der gesprochenen Information Sendeenergie eingespart werden kann.

Das erfindungsgemäße Verfahren wird anhand einer Figur näher erläutert.

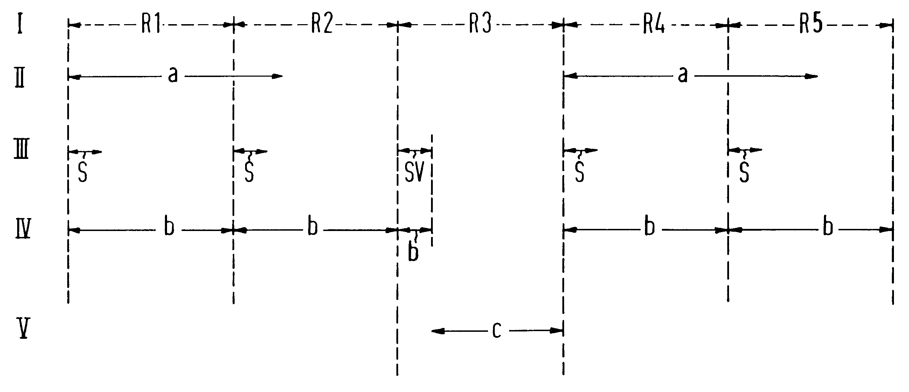

Die Figur zeigt mit den Kurven I bis V die möglichen Vorgänge beim Übertragen einer Information vom Mobilteil zum Festteil.

Die Kurve I zeigt einzelne Rahmenabschnitte R1 bis R5 der Rahmensynchronisation. Ein solcher Rahmenabschnitt dauert 10 µs. Die Kurve II zeigt zeitlich synchron zur Kurve I, wann eine tatsächlich zu übertragende Information vorliegt. Dies soll jeweils in den Bereichen a der Fall sein. Die in einem Rahmenabschnitt vorliegende Information wird zunächst je Rahmenabschnitt gespeichert und digitalisiert. Dabei wird der Rahmenabschnittsinhalt mit einem Pegelsignal verglichen, um festzustellen, ob es sich überhaupt um eine Information handelt. Dieser Pegel ist so gewählt, daß er knapp über dem Rauschpegel liegt, so daß keine Information verloren geht.

Im gewählten Beispiel liegt nach Kurve II in den Rahmenabschnitten R1, R2, R4 und R5 eine Information vor. Zunächst wird die Rahmenabschnittsinformation in R1 ausgesendet. Dabei werden dieser Information Steuerinformationen S nach Kurve III vorangesetzt. Entsprechend Kurve IV ist damit während R1 der Sender des Mobilteiles eingeschaltet (b). Anschließend wird die Information des Rahmenabschnittes R2 ausgesendet. Auch dort wurde Information ausgewertet und der Sender bleibt nach Kurve IV eingeschaltet (b).

Der Rahmenabschnitt R3 enthält keine Information. Damit ist eine Sprachpause festgestellt worden, die größer (oder zumindest gleich groß) als ein Rahmenabschnitt ist. Diese Feststellung führt dazu, daß der Steuerinformation nach Kurve III in R3 eine Pauseninformation V zugesetzt wird. Diese Pauseninformation V bewirkt, daß nach ihrer Übertragung (b/R3 in Kurve IV) der Sender des Mobilteiles nach b in R3 abgeschaltet wird. Diese Zeit beträgt dann ca. 8/10 eines Rahmenabschnittes. Während dieser Abschaltzeit wird, ausgelöst durch die übertragene Pauseninformation V im Festteil (für die Zeit c nach Kurve V), für den fernen Teilnehmer ein Rauschen generiert, um den Anschein einer Verbindungsunterbrechung zu verhindern.

## Patentansprüche

1. Verfahren zur Reduzierung des Leistungsverbrauches des Mobilteiles einer schnurlosen Fernsprechstation, wobei die Übertragung der Information vom Mobilteil zum Festteil in einer Rahmensynchronisation übertragen wird, wobei die in einem Rahmenabschnitt enthaltene Information zunächst gespeichert, digitalisiert und dann in digitaler Form rahmenabschnittsweise zum Festteil übertragen wird, wobei vor jedem Rahmenabschnitt Steuerinformationen zugesetzt werden, **dadurch gekennzeichnet,** daß Sprachpausen in der Information durch Vergleich mit einem Signalpegel erkannt werden, daß eine Sprachpause zu einer Pauseninformation (V) führt, wenn diese länger ist als ein Rahmenabschnitt (R1 bis R5), daß diese Pauseninformation (V) den Steuerinformationen (S) für die Übertragung des folgenden Rahmenabschnittes (R1 bis R5) zugesetzt wird und daß diese Pauseninformation (V) nach der Übertragung der Steuerinformationen (SV) den Sender des Mobilteiles für den Rest des Rahmenabschnittes (R1 bis R5) außer Betrieb setzt und gleichzeitig im Festteil für diese Zeit ein Rauschen generiert.

2. Verfahren nach Patentanspruch 1, **dadurch gekennzeichnet,** daß zum Erkennen der Pausen eine knapp oberhalb des Rauschpegels liegende Schwelle vorgegeben ist.
